# EUROPÄISCHE PATENTSCHRIFT

(11) **EP 3 245 480 B1**
(45) Veröffentlichungstag und Bekanntmachung des Hinweises auf die Patenterteilung: **21.08.2019**
(21) Anmeldenummer: 15813331.4
(22) Anmeldetag: 15.12.2015
(51) Int. Cl.: G01D 5/20, G01D 5/22, G01B 7/00

(54) **INDUKTIVE POSITIONSBESTIMMUNG**
INDUCTIVE POSITION DETERMINATION
DÉTERMINATION INDUCTIVE DE POSITION

(30) Priorität: 16.01.2015 DE 102015200620
(43) Veröffentlichungstag der Anmeldung: 22.11.2017
(73) Patentinhaber: ZF Friedrichshafen AG, 88046 Friedrichshafen (DE)
(72) Erfinder: PALIT, Ajoy, 28357 Bremen (DE); DEGEN, Joachim, 46517 Schermbeck (DE)
(86) Internationale Anmeldenummer: PCT/EP2015/079699
(87) Internationale Veröffentlichungsnummer: WO 2016/113057

(56) Entgegenhaltungen:
- EP-A1- 1 884 749
- DE-A1- 4 427 990
- DE-A1-102008 012 053
- DE-U1- 20 105 164
- DE-U1-202004 019 489

## Beschreibung

Die Erfindung betrifft eine induktive Positionsbestimmung. Insbesondere betrifft die Erfindung die Bestimmung einer relativen Position einer Einrichtung an Bord eines Kraftfahrzeugs.

An einem Kraftfahrzeug ist ein Wählhebel zur Beeinflussung einer in einem Getriebe eingelegten Gangstufe vorgesehen. Der Wählhebel kann durch den Fahrer in unterschiedliche Positionen gebracht werden, wobei der Wählhebel in einer Kulisse geführt sein kann. Dabei wird die Position des Wählhebels abgetastet und elektrisch bzw. elektronisch verarbeitet. Eine Steuereinrichtung kann dann das Getriebe auf der Basis des durch die Position des Wählhebels ausgedrückten Fahrerwunschs steuern.

Die Position des Wählhebels kann dadurch abgetastet werden, dass an einer Konsole eine Reihe von Spulen angebracht sind und am Wählhebel, der gegenüber den Konsole beweglich ist, ein elektrisch leitfähiges Dämpfungselement. Je näher sich das Dämpfungselement an einer der Spulen befindet, desto stärker wird die Induktivität dieser Spule durch das Dämpfungselement verringert. Das Dämpfungselement besteht in der Regel aus einem gut leitfähigen Material wie Kupfer, Aluminium oder Messing.

DE 20 2004 019 489 U1 zeigt eine induktive Sensoreinheit, die nach diesem Prinzip arbeitet. Für dieses Messverfahren müssen jedoch üblicherweise relative große Induktivitäten verwendet werden. Soll die Spule als gedruckte Schaltung ausgeführt werden, so sind hierfür häufig mehrere Lagen zu verwenden, deren Herstellung aufwendig ist. Außerdem müssen die Spulen mit hoher Genauigkeit hergestellt und anschließend getestet werden, wodurch weitere Kosten in der Produktion entstehen können. Außerdem kann diese Art von Positionsmessung eine mehrstufige elektronische Verstärkung und ggf. noch eine Umkehrstufe erfordern.

EP 1 884 749 A1 offenbart eine Vorrichtung zur induktiven Positionsbestimmung.

Der Erfindung liegt die Aufgabe zugrunde, eine verbesserte Vorrichtung zur induktiven Positionsbestimmung anzugeben. Die Erfindung löst diese Aufgabe mittels einer Vorrichtung mit den Merkmalen des unabhängigen Anspruchs. Unteransprüche geben bevorzugte Ausführungsformen wieder.

Eine Vorrichtung zur induktiven Positionsbestimmung umfasst eine Spule, ein Positionselement, eine Abtasteinrichtung zur Bestimmung einer Induktivität der Spule und eine Auswerteeinrichtung zur Bestimmung einer Position des Positionselements bezüglich der Spule auf der Basis der bestimmten Induktivität. Dabei umfasst das Positionselement ein ferromagnetisches und elektrisch isolierendes Material.

Im Gegensatz zu einer üblichen Anordnung, bei der das Positionselement ein elektrisch leitfähiges Metall umfasst und das durch Wirbelstrombildung die Induktivität der Spule verringert, kann das ferromagnetische und elektrisch isolierende Material die Induktivität der Spule erhöhen. Dadurch können ein Nutzsignal erhöht und ein Signal-Rausch-Abstand (SNR) vergrößert sein. Eine mehrstufige Verstärkung des Nutzsignals kann nicht erforderlich sein. Durch die Vergrößerung der Induktivität kann die Grundinduktivität der Spule ohne Einfluss des Positionselements relativ klein sein. Die Spule kann so verringerte Abmessungen aufweisen. Die Induktivität der Spule wird üblicherweise bestimmt, indem die Spule mittels einer elektrischen Frequenz angeregt wird. Diese Frequenz kann deutlich geringer sein als bei bekannten Anordnungen mit metallischem Positionselement. Die Frequenz kann beispielsweise ca. 12 MHz betragen und dadurch um mehrere Größenordnungen geringer sein als bei bekannten Anordnungen. Eine Schaltung zur Bereitstellung dieser Frequenz und die Auswerteeinrichtung können aufgrund der verringerten Frequenz einfacher oder mit kostengünstigeren Bauelementen ausgeführt werden. Schaltelemente zum Verbinden der Spule mit der Frequenz können ebenfalls kostengünstiger sein. Eine elektromagnetische Verträglichkeit der Vorrichtung kann ebenfalls verbessert sein.

Die Induktivitätserhöhung durch das Positionselement kann prägnanter als die Dämpfung durch ein metallisches Positionselement sein, sodass die Toleranzen der Elemente der Vorrichtung zur induktiven Positionsbestimmung größer gewählt sein können. Dadurch können kostengünstigere Bauelemente verwendet werden und ein Einmessen bzw. Abgleichen der Vorrichtung im Rahmen der Herstellung kann entfallen.

Bevorzugterweise weist das Positionselement eine relative Permeabilität von mehr als 150 auf. Übersteigt die relative Permeabilität eines Stoffs die Zahl 1, so spricht man von einem ferromagnetischen Stoff. Relative Permeabilitäten von ferromagnetischen Stoffen liegen üblicherweise im Bereich zwischen 4 und 15000. Eine Permeabilitätszahl von mehr als 150 kann sicherstellen, dass die Verstärkung der Induktion der Spule bei Annäherung des Positionselements ausreichend verstärkt wird, um ein zuverlässiges Messsignal zu generieren.

Es ist weiterhin bevorzugt, dass das Positionselement eine elektrische Leitfähigkeit von weniger als 10⁻⁶ S/m aufweist. Dieser Grenzwert entspricht der allgemeinen Auffassung von einem Nichtleiter, der keine oder eine praktisch unbedeutende elektrische Leitfähigkeit besitzt. Andere Definitionen sind alternativ anwendbar.

Die Spule ist bevorzugterweise als einlagige Flachspule ausgebildet. Insbesondere kann die Spule als gedruckte Schaltung auf einer Platine oder einem anderen Trägermaterial ausgebildet sein. Durch die einlagige Ausführung kann ein Mess- und Prüfaufwand wie beispielsweise bei einer Impedanzmessung von mehrlagigen Flachspulen entfallen. In einer anderen Ausführungsform kann die Spule auch als mehrlagige Flachspule ausgeführt sein, insbesondere als zweilagige Flachspule auf unterschiedlichen Außenlagen einer Platine oder eines vergleichbaren Trägermaterials. Bei der mehrlagigen Flachspule kann die Windungszahl reduziert oder eine gröbere Struktur verwendet werden. Dadurch können Herstellungskosten der Spule verringert sein.

In einer besonders bevorzugten Ausführungsform sind wenigstens zwei Spulen vorgesehen, wobei das Positionselement auf einer vorbestimmten Trajektorie gegenüber den Spulen beweglich ist und die Auswerteeinrichtung dazu eingerichtet ist, die Position des Positionselements auf der Trajektorie auf der Basis von Induktivitäten mehrerer der Spulen zu bestimmen. Die Spulen können beispielsweise auf einer Fläche unmittelbar nebeneinander angebracht sein, wobei die Trajektorie möglichst dicht an den Mittelpunkten der Spulen entlangführt. Das Positionselement kann so an jeder der Spulen nacheinander dicht vorbeigeführt werden. Durch das Verwenden mehrerer Spulen können die Induktivitäten benachbarter Spulen bestimmt werden, um die Position des Positionselements mit einer Auflösung zu bestimmen, die kleiner als der Abstand der Spulenmittelpunkte benachbarter Spulen ist. Anders ausgedrückt kann die Position des Positionselements genauer bestimmt werden, wenn es eine Position einnimmt, in der es die Induktivität von mehr als einer Spule beeinflusst. Insbesondere kann die Position des Positionselements zwischen zwei Punkten genauer bestimmt werden, an denen sich das Positionselement an benachbarte Spulen maximal annähert.

Das Positionselement kann in Richtung der Trajektorie wenigstens an einem Ende schmaler werden. Wird eine Länge des Positionselements in Richtung der Trajektorie bestimmt, so kann das Positionselement an einem Ende schmaler werden, insbesondere spitz zulaufen. Die nicht spitz zulaufende Grundfläche des Positionselements kann der Grundfläche der Spule entsprechen. Die Spule kann dabei insbesondere eine rechteckige oder quadratische, dem Positionselement zugewandte Oberfläche aufweisen. Durch den sich verjüngenden Fortsatz des Positionselements kann, wenn sich das Positionselement unmittelbar über einer Spule befindet, eine benachbarte Spule gerade so weit beeinflusst werden, dass ihr Messsignal zur verbesserten Positionsbestimmung des Positionselements beitragen kann. Insbesondere bei der Interpolation der Position des Positionselements, also bei der Auflösung der Position genauer als der Abstand zweier benachbarter Spulen, kann das schmaler werdende Ende unterstützend wirken.

Weiterhin kann das Positionselement in Richtung der Trajektorie etwa doppelt so lang sein wie ein Abstand zweier benachbarter Spulen. In dieser Ausführungsform ist es besonders bevorzugt, dass das Positionselement an beiden Enden schmaler wird wie oben beschrieben ist. Dadurch können maximal drei nebeneinanderliegende Spulen durch das Positionselement beeinflusst werden und somit für die Positionsbestimmung ein auswertbares Signal liefern.

Die Breite des Positionselements entspricht bevorzugterweise der Breite der Spule.

An der Spule ist ein ferromagnetisches und elektrisch isolierendes Element angebracht. Dieses Element kann zur Erhöhung der Grundinduktivität der Spule beitragen, sodass ein weiter verbessertes Messsignal bereitgestellt werden kann. Das beschriebene Element kann beispielsweise auf einer Oberfläche der Spule aufgebracht werden, sodass die Spule gegen elektrische Kontaktierung durch das Positionselement geschützt ist. Der vertikale Abstand des Positionselements von der Spule kann durch das elektrisch isolierende Element festgelegt sein.

Die Auswerteeinrichtung kann dazu eingerichtet sein, die Position auf der Basis der Induktivität mittels einer vorbestimmten Kennlinie zu bestimmen. Der Zusammenhang zwischen Induktivität der Spule und Abstand bzw. relativer Position des Positionselements ist üblicherweise nichtlinear und kann formelhaft häufig auch nur schlecht angenähert werden. Der Zusammenhang kann jedoch experimentell aufgenommen und in Form der Kennlinie abgespeichert werden. Im Fall von mehreren Spulen kann auch ein Kennfeld verwendet werden, das die Position auf der Basis zweier oder mehr Induktivitäten abbildet.

Die Auswerteeinrichtung kann dazu eingerichtet sein, die Position auf der Basis einer Induktivitätsänderung der Spule zu bestimmen, die von der Position des Positionselements abhängig ist. Dadurch muss die absolute Induktivität der Spule nicht mehr bestimmt werden.

Die Erfindung wird nun mit Bezug auf die beigefügten Figuren genauer beschrieben, in denen:
- Fig. 1: ein Blockschaltbild einer Vorrichtung zur induktiven Positionserfassung;
- Fig. 2: eine Induktivität einer Spule in Abhängigkeit der Position eines Positions-elements;
- Fig. 3: verschiedene Beispiele und in Abb. 3B eine Ausführungsform einer Spule und eines Positionselements für die Vorrichtung von Fig. 1;
- Fig. 4: eine Anordnung von mehreren Spulen für die Vorrichtung Fig. 1;
- Fig. 5: Darstellungen analog Fig. 2 an einigen der Spulen von Fig. 4;
- Fig. 6: eine nicht-planare Anordnung von Spulen für die Vorrichtung von Fig. 1; und
- Fig. 7: eine rotationssymmetrische Anordnung von Spulen für die Vorrichtung von Fig. 1
darstellt.

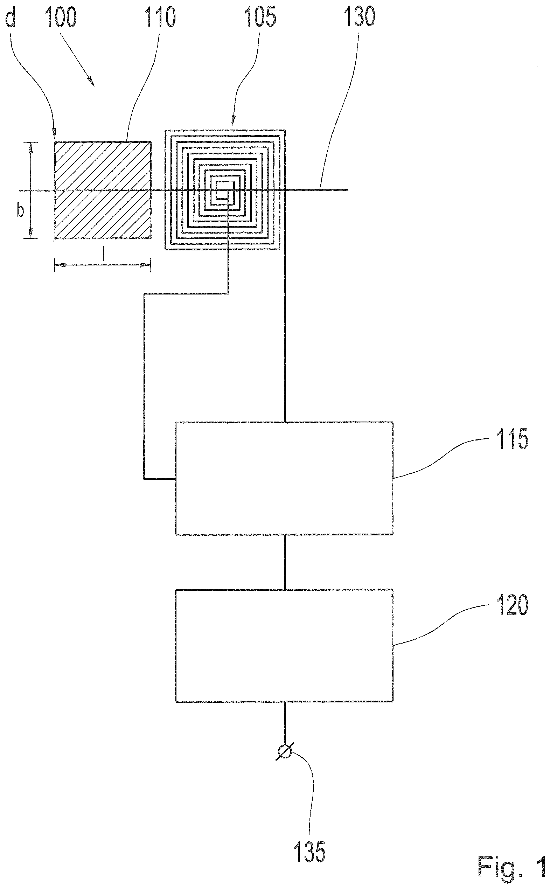

Figur 1 zeigt ein Blockschaltbild einer Vorrichtung 100 zur induktiven Positionserfassung. Die Vorrichtung 100 kann beispielsweise verwendet werden, um an Bord eines Kraftfahrzeugs eine Position eines Wählhebels für ein automatisches Getriebe, eine Position eines verstellbaren Sitzes, eine Position eines verstellbaren Außenspiegels oder eine Position eines beweglichen Gaspedals zu bestimmen. Andere Positionserfassungen, insbesondere an Bord des Kraftfahrzeugs, sind ebenfalls möglich.

Die Vorrichtung 100 umfasst eine Spule 105, ein Positionselement 110, eine Abtasteinrichtung 115 und eine Auswerteeinrichtung 120. Die Spule 105 kann auf beliebige Weise ausgeführt sein, bevorzugterweise ist sie jedoch als ein- oder mehrlagige Flachspule ausgeführt. Die Spule 105 kann insbesondere aus einem hoch leitfähigen Material herstellbar sein, etwa Silber, Kupfer, Aluminium oder Gold, wobei das Material als Paste gedruckt, geätzt oder geklebt werden kann. Das Positionselement 110 ist bezüglich der Spule 105 beweglich angebracht, wobei die Beweglichkeit des Positionselements 110 entlang einer vorbestimmten Trajektorie 130 eingeschränkt sein kann. Die Trajektorie 130 verläuft bevorzugterweise durch den Mittelpunkt bzw. eine Längsachse der Spule 105 und einen korrespondierenden Mittelpunkt des Positionselements 110. Das Positionselement 110 ist bevorzugterweise flach ausgebildet und so geformt, dass seine Umrisse die Oberfläche der Spule 105 abdecken, wenn das Positionselement 110 auf der Trajektorie 130 maximal an die Spule 105 angenähert ist. Eine Länge I des Positionselements 110 erstreckt sich entlang der Trajektorie 130 und eine Breite b senkrecht dazu. Eine Dicke d entlang der Längsachse der Spule 105 beträgt vorzugsweise wenigstens einige zehntel Millimeter. Je größer die Dicke d, desto stärker wird die Induktion der Spule 105 vergrößert, wenn das Positionselement 110 in den Bereich der Spule 105 gebracht wird. Bevorzugterweise liegt die Dicke d des Positionselements 110 im Bereich von ca. 0,5 bis 3,5 mm, weiter bevorzugt zwischen 1 und 2 mm.

Das Positionselement 110 umfasst ein ferromagnetisches und elektrisch isolierendes Material, nämlich ein Nickel-Zink-Ferrit oder ein Mangan-Zink-Ferrit. Diese sind beispielsweise unter der Bezeichnung MP1040-200, MP1040-100 von Laird-Technologies oder unter der Bezeichnung WE354006 aus der WE-FSFS-354 - Materialgruppe von Würth-Elektronik erhältlich. Diese Materialien eignen sich insbesondere zur Abschirmung von 13,56 MHz-RFID-Transpondern. Das Material WE354006 hat beispielsweise in einer Blockform mit einer Länge und Breite von jeweils 60 mm und einer Dicke von 0,3 mm bei 13,56 MHz eine komplexe Permeabilität µ'=150, µ"=90, wobei die relative Permeabilität zu µᵣ = µ'-jµ" bzw. µᵣ=B/B₀=√(µ^{'2}+µ^{"2}) = ca. 175 definiert ist. Dabei definiert B die magnetische Flussdichte im Ferritmaterial und B₀ die magnetische Flussdichte in Luft oder Vakuum.

Eine Dicke des Ferritmaterials wirkt sich auf die Genauigkeit der Positionserkennung aus. Im Einzelnen nimmt die Induktivität einer Messspule mit zunehmender Dicke des Positionselementes signifikant zu. Beispielsweise kann eine Induktivitätssteigerung um 40 Prozent bei einer einlagigen Spule mit einem relativen Abstand von 0,3 mm zu einem Positionselement, welches aus dem Würth-Material WE354006 hergestellt ist und welches eine Länge von 11 mm, eine Breite von 5,5 mm und eine Dicke von 0,3 mm aufweist, erreicht werden. Dünnere Materialien wie beispielsweise die Würth-Materialien WE354004 und WE354005 haben bei gleicher Materialeigenschaft wie WE354006, aber einer geringeren Dicke von 0,1 mm bzw. 0,2 mm einen deutlich kleineren Einfluss auf die Induktivität der Messspule.

Das Material ist so zu wählen, dass die Ummagnetisierungsverluste in einem elektromagnetischen Wechselfeld der Spule 105 deutlich kleiner als der Verstärkungseffekt der Induktivität der Spule 105 sind, damit sich ein deutlicher Verstärkungseffekt einstellt, wenn das Positionselement 110 an die Spule 105 angenähert wird. Bekannte Materialien für das Positionselement 110 können bei Frequenzen von bis zu 15 MHz und mehr verwendet werden.

Die Abtasteinrichtung 115 ist dazu eingerichtet, die Spule 105 mit einem elektrischen Signal anzuregen, insbesondere einem regelmäßigen Signal konstanter Frequenz, bevorzugterweise einer Rechteck- oder Sinusschwingung. Zur Bestimmung der Induktivität der Spule 105 kann die Auswerteeinrichtung 120 beispielsweise einen ohmsch-induktiven Spannungsteiler umfassen. Die Abtasteinrichtung 115 stellt der Auswerteeinrichtung 120 ein Signal bereit, das von der Induktivität der Spule 105 oder von der Änderung der Induktivität der Spule 105 durch das Annähern des Positionselements 110 abhängiges Signal abhängt. Die Auswerteeinrichtung 120 kann analog oder digital ausgeführt sein. In einer Ausführungsform bestimmt die Auswerteeinrichtung 120 die Position des Positionselements 110 bezüglich der Spule 105 mittels einer in einem Speicher abgelegten Kennlinie. Die Kennlinie kann beispielsweise experimentell aufgenommen worden sein. Über eine optionale Schnittstelle 135 kann die Auswerteeinrichtung 120 die Position des Positionselements 110 bereitstellen.

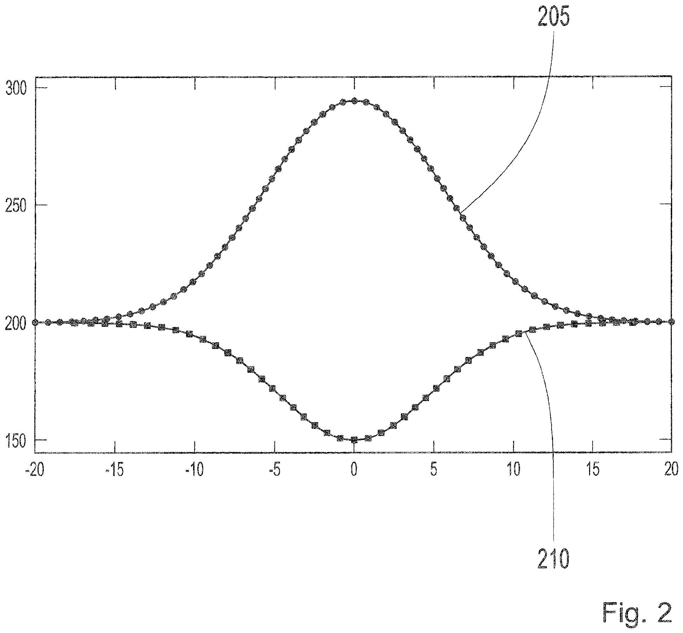

Figur 2 zeigt die Induktivität der Spule 105 in Abhängigkeit der Position des Positionselements 110 an der Vorrichtung von Figur 1. In der horizontalen Richtung ist die Position des Positionselements 110 entlang der Trajektorie 130 in Millimetern und in vertikaler Richtung die Induktivitätsänderung der Spule 105 in nH in Antwort auf die Position des Positionselements 110 angetragen. Die verwendeten Größenordnungen und Kurvenformen sind dabei als rein exemplarisch zu verstehen.

Eine erste Kennlinie 205 zeigt die Erhöhung der Induktivität der Spule 105 bei Annäherung des Positionselements 110. Zum Vergleich zeigt eine zweite Kennlinie 210 die Abschwächung der Induktivität der Spule 105 unter vergleichbaren Umständen bei Verwendung eines elektrisch leitfähigen Positionselements 110. Die Kennlinie 205 zeigt nicht nur eine stärkere Veränderung bei maximaler Annäherung des Positionselements 110 an die Spule 105 als die zweite Kennlinie 210, sondern auch eine breitere Form, die zur genaueren Bestimmung der Position vorteilhaft genutzt werden kann.

An einer Vorrichtung 100 nach Figur 1 mit einem Positionselement 110 mit einer Dicke d von 1,91 mm, einem vertikalen Abstand von 0,3 mm zur Spule 105, einer Permeabilitätszahl von mehr als 150 wurde die dargestellte maximale Verstärkung der Induktivität der Spule 105 von ca. 48 Prozent bestimmt. Das Positionselement 110 hatte dabei eine Breite b von 5,5 mm, eine Länge I von 11 mm und bestand aus dem Material MP1040-200. Die Spule 105 hatte einen Durchmesser von 5,45 mm und war als Flachspule mit neun Windungen ausgeführt. Ein von der Länge und Breite identisches Positionselement 110 aus dem Material MP1040-100 mit einer abweichenden Dicke d von 1,27 mm führte zu einer Verstärkung der Induktivität der Spule 105 von ca. 44 Prozent.

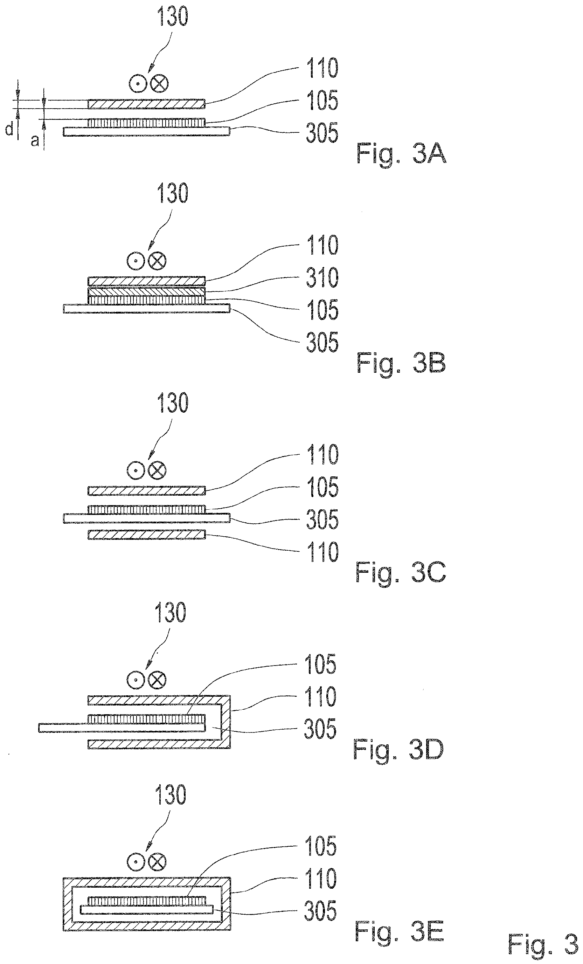

Figur 3 zeigt verschiedene Beispiele von Anordnungen der Spule 105 und des Positionselements 110 an der Vorrichtung 100 von Figur 1.

Figur 3a zeigt die als Flachspule ausgeführte Spule 105 auf der Oberfläche einer Platine 305. Die Platine 305 kann beispielsweise aus Keramik, Glas, Polyimid, FR4 oder einem anderen geeigneten Trägermaterial herstellbar sein. Alternativ kann die Spule 105 auch auf eine Oberfläche eines an einer Messanordnung vorhandenen Elements aufgebracht werden, beispielsweise durch Bekleben. In einer vorbestimmten Höhe h über der Spule 105 ist das Positionselement 110 angeordnet. Bevorzugterweise wird die Höhe h eingehalten, wenn das Positionselement 110 seine Position bezüglich der Spule 105 ändert. Die Trajektorie 130 ist symbolhaft über dem Positionselement 110 angedeutet.

Figur 3b zeigt die Ausführungsform, bei der jedoch zusätzlich ein ferromagnetisches und elektrisch isolierendes Element 310 im Bereich der Spule 105 vorgesehen ist. Bevorzugterweise liegt das Element 310 zwischen der Spule 105 und dem Positionselement 110, sodass das Positionselement 110 an der Oberfläche des Elements 310 auch anliegen kann. Zusätzlich oder alternativ kann ein ferromagnetisches und elektrisch isolierendes Element 310 auch beispielsweise an der Unterseite der Platine 305, die der Spule 105 abgewandt ist, angebracht werden.

Figur 3c zeigt ein Beispiel mit zwei Positionselementen 110, die auf unterschiedlichen vertikalen Seiten der Spule 105 angeordnet und in geeigneter Weise mechanisch miteinander verbunden sind. Dadurch kann die Beeinflussung der Induktivität der Spule 105 in Abhängigkeit der Position der Positionselemente 110 vergrößert werden.

Figur 3d zeigt ein ähnliches Beispiel, bei dem das Positionselement 110 die Platine 305 und die Spule 105 einseitig umgreift.

Figur 3e zeigt ein Beispiel, bei dem das Positionselement 110 die Platine 305 und die Spule 105 beidseitig umgreift.

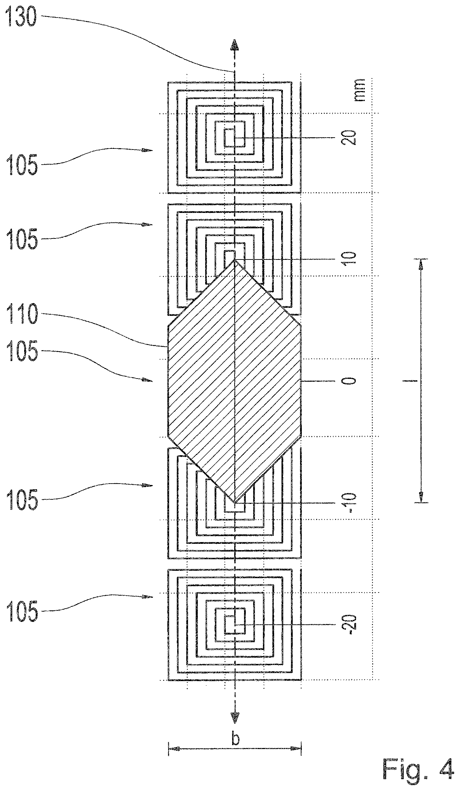

Figur 4 zeigt eine Anordnung von mehreren Spulen 105 für die Vorrichtung 100 von Figur 1. In horizontaler Richtung ist eine exemplarische Positionierungsskala dargestellt, die sich auf den Mittelpunkt der mittleren (durch das Positionselement 110 verdeckten) Spule 105 bezieht. Die Spulen 105 sind gleichmäßig entlang der Trajektorie 130 angeordnet und haben im Wesentlichen gleiche Oberflächen.

Das Positionselement 110 umfasst ein Mittelsegment, das die Form der Oberfläche einer Spule 105 aufweist (im vorliegenden Beispiel also rechteckig), und erstreckt sich bevorzugterweise entlang der Trajektorie 130 beidseitig weiter in schmaler werdenden Fortsätzen. Diese Fortsätze sind bevorzugterweise dreieckig und die Gesamtlänge I des Positionselements 110 entlang der Trajektorie 130 ist bevorzugterweise doppelt so groß wie der Abstand zweier benachbarter Spulen 105. Anders ausgedrückt weist das Positionselement 110 die Form eines Rhombus auf, der sich entlang der Trajektorie 130 bis zu Längsachsen von Spulen 105 erstreckt, die zu einer vollständig verdeckten Spule 105 auf unterschiedlichen Seiten benachbart sind. Durch die Verwendung mehrerer, insbesondere aneinander angrenzender Spulen 105 kann die Position des Positionselements 110 auf der Basis der Induktion der Spulen 105 verbessert bestimmt werden. Die dargestellte Form des Positionselements 110 mit spitz zulaufenden Enden kann verwendet werden, um sicherzustellen, dass nicht nur eine Spule 105, die minimal vom Positionselement 110 entfernt ist, sondern auch eine benachbarte Spule 105 durch das Positionselement 110 in ihrer Induktivität auf messbare Weise beeinflusst wird.

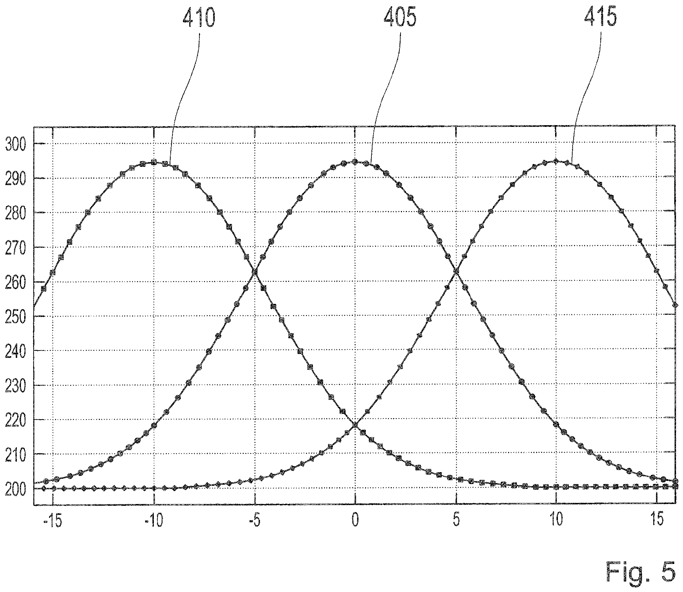

Figur 5 zeigt Darstellungen analog von Figur 2 an drei zueinander benachbarten Spulen 105 der Anordnung von Figur 1. In horizontaler Richtung ist die Position des Positionselements 110 bezüglich der in Figur 4 dargestellten Trajektorie 130 und in vertikaler Richtung sind Induktivitäten der in Figur 4 mittleren Spule 105 und ihrer rechten und linken Nachbarspule 105 dargestellt. Die dargestellten Induktivitätswerte sind als exemplarisch aufzufassen. Das Positionselement 110, das den dargestellten Induktivitäten 405, 410 und 415 zugrunde liegt, hat die in Figur 4 dargestellte Form eines Rhombus. Es wird deutlich, dass die Position des Positionselements 110 mit einer kleineren Auflösung als dem Abstand zweier benachbarter Spulen 105 bestimmt werden kann, wenn die Induktivitäten mehrerer benachbarter Spulen 105 berücksichtigt werden. Die Induktivitäten der einzelnen Spulen 105 können beispielsweise durch Multiplexen bestimmt werden, also durch sequentielles Verbinden der Spulen 105 mit der Abtasteinrichtung 115.

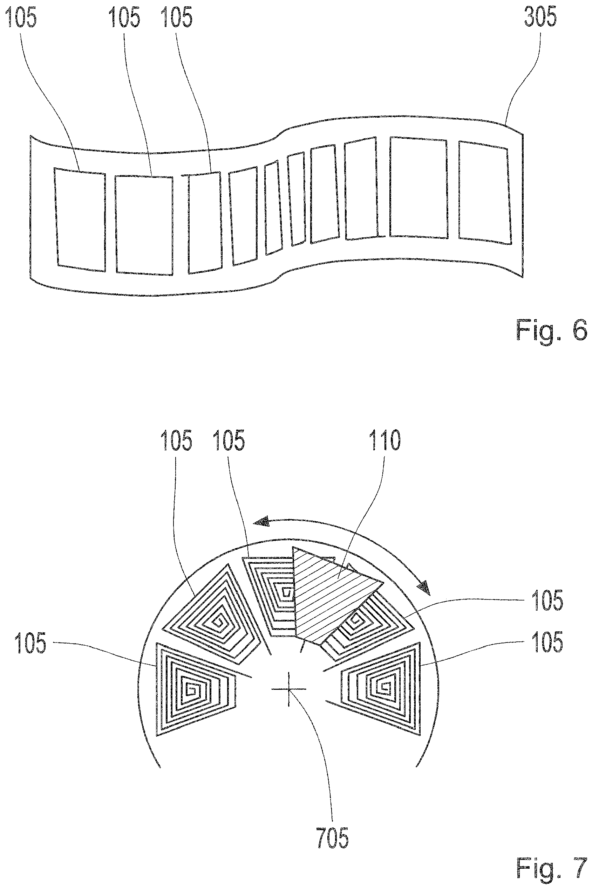

Figur 6 zeigt eine nicht-planare Anordnung von Spulen 105 für die Vorrichtung 100 von Figur 1. Beispielsweise kann das Beispiel von Figur 3a entlang einer Kurve oder Fläche gebogen sein. Die Trajektorie 130 verläuft bevorzugterweise durch Längsachsen aller Spulen 105, und weiter bevorzugt in einheitlicher Höhe bezüglich der Spulen 105 bzw. der Platine 305.

Figur 7 zeigt eine rotationssymmetrische Anordnung von Spulen 105 für die Vorrichtung 100 von Figur 1. Mit dieser Anordnung kann eine rotatorische Position des Positionselements 110 um eine Rotationsachse 705 bestimmt werden.

### Bezugszeichen

- 100: Vorrichtung
- 105: Spule
- 110: Positionselement
- 115: Abtasteinrichtung
- 120: Auswerteeinrichtung
- 130: Trajektorie
- 135: Schnittstelle

- 205: erste Kennlinie
- 210: zweite Kennlinie

- 305: Platine
- 310: ferromagnetisches und elektrisch isolierendes Element

- 405: erste Induktivität
- 410: zweite Induktivität
- 415: dritte Induktivität

- 705: Rotationsachse

## Patentansprüche

1. Vorrichtung (100) zur induktiven Positionsbestimmung, umfassend:
- eine Spule (105);
- ein Positionselement (110);
- eine Abtasteinrichtung (115) zur Bestimmung einer Induktivität der Spule (105);
- eine Auswerteeinrichtung (120) zur Bestimmung einer Position des Positionselements (110) bezüglich der Spule (105) auf der Basis der bestimmten Induktivität,
- wobei das Positionselement (110) ein ferromagnetisches und elektrisch isolierendes Material umfasst, wobei das Material ein Nickel-Zink-Ferrit oder ein Mangan-Zink-Ferrit ist,
**dadurch gekennzeichnet, dass**
- an der Spule (105) ein ferromagnetisches und elektrisch isolierendes Element (310) angebracht ist, das zwischen dem Positionselement (110) und der Spule 105 liegt.

2. Vorrichtung (100) nach Anspruch 1, wobei das Positionselement (110) eine relative Permeabilität von mehr als 150 aufweist.

3. Vorrichtung (100) nach Anspruch 1 oder 2, wobei das Positionselement (110) eine elektrische Leitfähigkeit von weniger als 10⁻⁶ S/m aufweist.

4. Vorrichtung (100) nach einem der vorangehenden Ansprüche, wobei die Spule (105) eine einlagige Flachspule (105) ist.

5. Vorrichtung (100) nach einem der vorangehenden Ansprüche, wobei
- wenigstens zwei Spulen (105) vorgesehen sind;
- das Positionselement (110) auf einer vorbestimmten Trajektorie (130) gegenüber den Spulen (105) beweglich ist;
- die Auswerteeinrichtung (120) dazu eingerichtet ist, die Position des Positionselements (110) auf der Trajektorie (130) auf der Basis von Induktivitäten der Spulen (105) zu bestimmen.

6. Vorrichtung (100) nach Anspruch 5, wobei das Positionselement (110) in Richtung der Trajektorie (130) wenigstens an einem Ende schmaler wird.

7. Vorrichtung (100) nach Anspruch 5 oder 6, wobei das Positionselement (110) in Richtung der Trajektorie (130) etwa doppelt so lang ist wie ein Abstand zweier benachbarter Spulen (105).

8. Vorrichtung (100) nach einem der vorangehenden Ansprüche, wobei eine Breite des Positionselements (110) etwa der Breite der Spule (105) entspricht.

9. Vorrichtung (100) nach einem der vorangehenden Ansprüche, wobei die Auswerteeinrichtung (120) dazu eingerichtet ist, die Position auf der Basis der Induktivität mittels einer vorbestimmten Kennlinie (205, 410, 415, 420) zu bestimmen.

10. Vorrichtung (100) nach einem der vorangehenden Ansprüche, wobei die Auswerteeinrichtung (120) dazu eingerichtet ist, die Position auf der Basis einer Induktivitätsänderung der Spule (105) zu bestimmen, die von der Position des Positionselements (110) abhängig ist.

## Claims

1. Apparatus (100) for inductive position determination, comprising:
- a coil (105);
- a position element (110);
- a scanning device (115) for determining an inductance of the coil (105);
- an evaluation device (120) for determining a position of the position element (110) with respect to the coil (105) on the basis of the determined inductance;
- wherein the position element (110) comprises a ferromagnetic and electrically insulating material, wherein the material is a nickel zinc ferrite or a manganese zinc ferrite,
**characterized in that**
- a ferromagnetic and electrically insulating element (310) which is situated between the position element (110) and the coil (105) is fitted to the coil (105) .

2. Apparatus (100) according to Claim 1, wherein the position element (110) has a relative permeability of more than 150.

3. Apparatus (100) according to Claim 1 or 2, wherein the position element (110) has an electrical conductivity of less than 10⁻⁶ S/m.

4. Apparatus (100) according to one of the preceding claims, wherein the coil (105) is a single-layer flat coil (105).

5. Apparatus (100) according to one of the preceding claims, wherein
- at least two coils (105) are provided;
- the position element (110) can move on a predetermined trajectory (130) in relation to the coils (105);
- the evaluation device (120) is designed to determine the position of the position element (110) on the trajectory (130) on the basis of inductances of the coils (105).

6. Apparatus (100) according to Claim 5, wherein the position element (110) is narrower at least at one end in the direction of the trajectory (130).

7. Apparatus (100) according to Claim 5 or 6, wherein the position element (110) is approximately twice as long as a distance between two adjacent coils (105) in the direction of the trajectory (130).

8. Apparatus (100) according to one of the preceding claims, wherein a width of the position element (110) corresponds approximately to the width of the coil (105) .

9. Apparatus (100) according to one of the preceding claims, wherein the evaluation device (120) is designed to determine the position on the basis of the inductance by means of a predetermined characteristic curve (205, 410, 415, 420).

10. Apparatus (100) according to one of the preceding claims, wherein the evaluation device (120) is designed to determine the position on the basis of a change in inductance of the coil (105), which change in inductance is dependent on the position of the position element (110).

## Revendications

1. Dispositif de détermination inductive de position (100), comprenant :
- une bobine (105) ;
- un élément de position (110) ;
- un dispositif de balayage (115) servant à déterminer une inductance de la bobine (105) ;
- un moyen d'évaluation (120) servant à déterminer une position de l'élément de position (110) par rapport à la bobine (105) sur la base de l'inductance déterminée,
- dans lequel l'élément de position (110) comprend un matériau ferromagnétique et électriquement isolant, dans lequel le matériau est une ferrite de nickel-zinc ou une ferrite de manganèse-zinc,
**caractérisé en ce que**
- un élément ferromagnétique électriquement isolant (310) est fixé à la bobine (105) et est situé entre l'élément de position (110) et la bobine (105).

2. Dispositif (100) selon la revendication 1, dans lequel l'élément de position (110) présente une perméabilité relative supérieure à 150.

3. Dispositif (100) selon la revendication 1 ou 2, dans lequel l'élément de position (110) présente une conductivité électrique inférieure à 10⁻⁶ S/m.

4. Dispositif (100) selon l'une des revendications précédentes, dans lequel la bobine (105) est une bobine plane monocouche (105).

5. Dispositif (100) selon l'une des revendications précédentes, dans lequel
- il est prévu au moins deux bobines (105) ;
- l'élément de position (110) est mobile sur une trajectoire prédéterminée (130) par rapport aux bobines (105) ;
- le dispositif d'évaluation (120) est conçu pour déterminer la position de l'élément de position (110) sur la trajectoire (130) sur la base des inductances des bobines (105).

6. Dispositif (100) selon la revendication 5, dans lequel l'élément de position (110) devient plus étroit au moins à une extrémité dans la direction de la trajectoire (130).

7. Dispositif (100) selon la revendication 5 ou 6, dans lequel l'élément de position (110) est approximativement deux fois plus long dans la direction de la trajectoire (130) qu'une distance entre deux bobines adjacentes (105).

8. Dispositif (100) selon l'une des revendications précédentes, dans lequel une largeur de l'élément de position (110) correspond approximativement à la largeur de la bobine (105).

9. Dispositif (100) selon l'une des revendications précédentes, dans lequel le dispositif d'évaluation (120) est conçu pour déterminer la position sur la base de l'inductance au moyen d'une courbe caractéristique prédéterminée (205, 410, 415, 420).

10. Dispositif (100) selon l'une des revendications précédentes, dans lequel le dispositif d'évaluation (120) est conçu pour déterminer la position sur la base d'une variation de l'inductance de la bobine (105), qui est fonction de la position de l'élément de position (110) .
